# EUROPEAN PATENT APPLICATION

(11) **EP 4 598 118 A1**
(43) Date of publication of application: **06.08.2025**
(21) Application number: 22960400.4
(22) Date of filing: 30.09.2022
(51) Int. Cl.: H04W 36/00

(54) **NEIGHBOR CELL MEASUREMENT METHOD AND APPARATUS, DEVICE, MEDIUM, AND PROGRAM PRODUCT**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/123536
(87) International publication number: WO 2024/065788

(57) **Abstract**

The present application relates to the field of mobile communications, and discloses a neighbor cell measurement method and apparatus, a device, a medium, and a program product. The method comprises: measuring a neighbor cell on the basis of neighbor cell measurement starting time and/or a neighbor cell measurement standard, wherein the neighbor cell measurement standard is a measurement standard related to neighbor cell measurement time. The method implements neighbor cell measurement triggered on the basis of time.

## Description

### TECHNICAL FIELD

The present application relates to the field of mobile communications, in particular to a neighbor cell measurement method and apparatus, a device, a medium, and a program product.

### BACKGROUND

For Narrow Band Internet of Things (NB-IoT), connected User Equipment (UE) will not measure the neighbor cell before it detects Radio Link Failure (RLF). When UE detects RLF, performing Radio Resource Control (RRC) reestablishment. Measuring the neighbor cell during the RRC reestablishment, and selecting an appropriate cell according to the cell selection criteria.

In 5G Release 17 (R17), in order to reduce the delay of UE in performing RRC reestablishment, connected UE may measure the neighbor cell before sending RLF, and perform RRC reestablishment after sending RLF, it can select the reconstructed target cell according to the previous measurement results.

### SUMMARY

Embodiments of the present application provide the neighbor cell measurement method and apparatus, the device, the medium, and the program product. The technical solution is as follows.

According to an aspect of the present application, there is provided a method for measuring a neighbor cell, the method is performed by a terminal, and the method includes:
measuring the neighbor cell based on a neighbor cell measurement starting time and/or a neighbor cell measurement standard;
where the neighbor cell measurement standard is a measurement standard related to a time for measuring the neighbor cell.

According to an aspect of the present application, there is provided a method for measuring a neighbor cell, the method is performed by a network device, and the method includes:
sending a configuration information to a terminal, the configuration information being related to a neighbor cell measurement starting time and/or a neighbor cell measurement standard,
where the neighbor cell measurement standard is a measurement standard related to a time for measuring the neighbor cell.

According to another aspect of the present application, there is provided an apparatus for measuring a neighbor cell, the apparatus includes:
a processing module, configured to measure the neighbor cell based on a neighbor cell measurement starting time and/or a neighbor cell measurement standard;
where the neighbor cell measurement standard is a measurement standard related to a time for measuring the neighbor cell.

According to another aspect of the present application, there is provided an apparatus for measuring a neighbor cell, the apparatus includes:
a sending module, configured to send a configuration information to a terminal, the configuration information being related to a neighbor cell measurement starting time and/or a neighbor cell measurement standard;
where the neighbor cell measurement standard is a measurement standard related to a time for measuring the neighbor cell.

According to another aspect of the present application, there is provided a terminal, the terminal includes:
a processor;
a transceiver connected with the processor; and
a memory for storing an executable instruction of the processor;
where the processor is configured to load and execute the executable instruction to implement the method for measuring the neighbor cell according to above aspects.

According to another aspect of the present application, there is provided a network device, the network device includes:
a processor;
a transceiver connected with the processor; and
a memory for storing an executable instruction of the processor;
where the processor is configured to load and execute the executable instruction to implement the method for measuring the neighbor cell according to above aspects.

According to another aspect of the present application, there is provided a computer-readable storage medium, where the computer-readable storage medium stores an executable instruction, and the executable instruction is loaded and executed by a processor to implement the method for measuring the neighbor cell according to above aspects.

According to another aspect of the present application, there is provided a chip, where the chip includes a programmable logic circuit and/or a program instruction, and the chip is used for, upon running on a computer device, implementing the method for measuring the neighbor cell according to above aspects.

According to another aspect of the present application, there is provided a computer program product (or computer program), where the computer program product (or computer program) includes a computer instruction stored in a computer-readable storage medium, and a processor of a computer device reads and executes the computer instruction from the computer-readable storage medium, thereby causing the computer device to implement the method for measuring the neighbor cell according to above aspects.

The technical solution provided by the present application at least includes the following beneficial effects.

According to the neighbor cell measurement method, the neighbor cell measurement is triggered based on at least one of the neighbor cell measurement starting time and the neighbor cell measurement standard, where the neighbor cell measurement standard is a measurement standard related to a time for measuring the neighbor cell, thereby providing a neighbor cell measurement solution triggered based on time.

### BRIEF DESCRIPTION OF DRAWINGS

In order to explain the technical solution in the embodiments of the present application more clearly, the drawings needed in the description of the embodiments will be briefly introduced below. It is to be noted that the drawings in the following description are only some embodiments of the present application. For ordinary skilled in this art, other drawings can be obtained according to these drawings without inventive work.
FIG. 1 is a schematic diagram of a communication system provided by an exemplary embodiment of the present application.
FIG. 2 is a schematic diagram of a NB-IoT NTN system provided by an exemplary embodiment of the present application.
FIG. 3 is a flowchart of the method for measuring the neighbor cell provided by an exemplary embodiment of the present application.
FIG. 4 is a flowchart of the method for measuring the neighbor cell provided by another exemplary embodiment of the present application.
FIG. 5 is a flowchart of the method for measuring the neighbor cell provided by another exemplary embodiment of the present application.
FIG. 6 is a flowchart of the method for measuring the neighbor cell provided by another exemplary embodiment of the present application.
FIG. 7 is a flowchart of the method for measuring the neighbor cell provided by another exemplary embodiment of the present application.
FIG. 8 is a flowchart of the method for measuring the neighbor cell provided by another exemplary embodiment of the present application.
FIG. 9 is a flowchart of the method for measuring the neighbor cell provided by another exemplary embodiment of the present application.
FIG. 10 is a flowchart of the method for measuring the neighbor cell provided by another exemplary embodiment of the present application.
FIG. 11 is a flowchart of the method for measuring the neighbor cell provided by another exemplary embodiment of the present application.
FIG. 12 is a structural block diagram of the apparatus for measuring the neighbor cell provided by an exemplary embodiment of the present application.
FIG. 13 is a structural block diagram of the apparatus for measuring the neighbor cell provided by another exemplary embodiment of the present application.
FIG. 14 is a schematic structural diagram of a communication device provided by an exemplary embodiment of the present application.

### DETAILED DESCRIPTION

In order to make the purpose, technical solution and advantages of the present application clearer, the embodiments of the present application will be further described in detail with the drawings.

Exemplary embodiments will be explained in detail, examples of which are shown in the drawings. When the following description refers to the drawings, unless otherwise indicated, the same numbers in different drawings indicate the same or similar elements. The implementations described in the following exemplary embodiments do not represent all implementations consistent with the present application. Rather, they are merely examples of apparatuses and methods consistent with some aspects of the present application as detailed in the attached claims.

The term used in present disclosure is for the purpose of describing specific embodiments only and is not intended to limit the present disclosure. The singular forms "a", "the" and "said" used in the present disclosure and the appended claims are also intended to include the plural forms, unless the context clearly indicates other meaning. It should also be understood that the term "and/or" as used herein refers to and includes any or all possible combinations of one or more associated listed items.

It should be understood that although the terms first, second, third, etc. may be used to describe various information in the present disclosure, such information should not be limited to these terms. These terms are only used to distinguish the same type of information from each other. For example, without departing from the scope of the present disclo sure, a first information may also be called a second information, and similarly, the second information may also be called the first information. Depending on the context, the word "if" as used here can be interpreted as "when" or "in response to ... determining ...".

For NB-IoT, the connected UE will not measure the neighbor cell before it detects Radio Link Failure (RLF). When UE detects RLF, RRC reestablishment is performed. The neighbor cell is measured during the RRC reestablishment, and the appropriate cell is selected according to the cell selection criteria.

In 5GR17, in order to reduce the delay of UE in performing RRC reestablishment, connected UE may measure the neighbor cell before sending RLF. Accordingly, when performing RRC reestablishment after sending RLF, it can select the target cell for reestablishment according to the previous measurement results.

In the process of UE's connected state measurement, the UE's measurement relaxation function in connected state is considered, that is, the parameter of the neighbor cell measurement standard (neighCellMeasCriteria) is considered. If the network device is configured with the neighbor cell measurement standard, it means that the connected state measurement transmission is activated. Therefore, when the signal quality change of the serving cell reaches a certain value, the UE will measure the neighbor cell within a certain time. If the neighbor cell measurement standard is not configured, the UE needs to perform connected state measurement all the time.

In the discussion of the Internet of Things (IoT) Non-Terrestrial Network (NTN) in the 5G Release 18(R18), under the condition of reusing the criterion in R17 for connected state measurement, the present application also provides a criterion of the neighbor cell measurement triggered based on time, as a new criterion for triggering UE to perform neighbor cell measurement, as shown in the following embodiments.

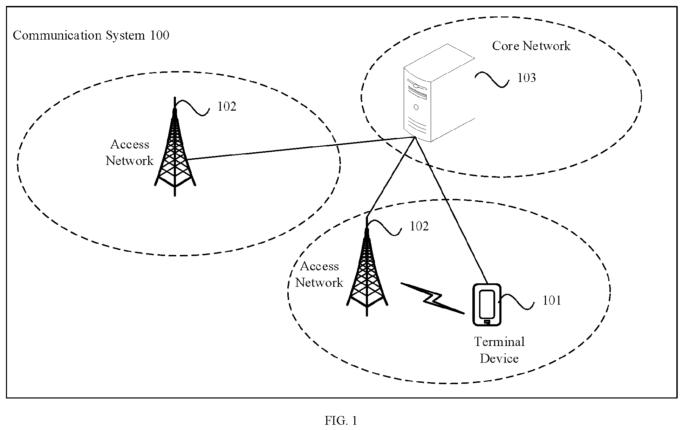

FIG. 1 is the schematic diagram of the communication system provided by an exemplary embodiment of the present application. The communication system 100 may include a user terminal 101, an access network device 102 and a core network device 103.

The number of the user terminals 101 is usually multiple, and one or more user terminals 101 can be distributed in a cell managed by each access network device 102. The user terminal 101 may include various handheld devices, vehicle-mounted devices, wearable devices, computing devices or other processing devices connected to a wireless modem with wireless communication functions, as well as various forms of user devices, Mobile Station (MS), terminal device, and the like. For convenience of description, in the embodiments of the present application, the above-mentioned devices are collectively referred to as "terminal".

The access network device 102 is an apparatus deployed in an access network to provide a wireless communication function for the user terminal 101. The access network device 102 may include various forms of macro-base station, micro-base station, relay station, and access point. In systems with different wireless access technologies, the names of devices with access network functions may be different. For example, in Long Term Evolution (LTE) systems, they are called eNodeB or eNB; in the 5th Generation (5G) mobile communication technology New Radio (NR) system, they are called gNodeB or gNB. With the evolution of communication technology, the name "access network device" may change. For convenience of description, in the embodiments of this application, the above-mentioned apparatuses providing wireless communication function for the user terminal 101 are collectively referred to as the access network device.

The access network device 102 and the user terminal 101 can communicate with each other through a sort of air interface technology, such as Uu interface. The above communication includes the interaction of signaling and data. The number of access network devices 102 can be multiple, and two adjacent access network devices 102 can also communicate by wired or wireless means. The user terminal 101 can perform handover between different access network devices 102, that is, establish connections with different access network devices 102.

The functions of the core network device 103 are mainly to provide user connection, management of user and service bearing, and serve as the bearer network providing interface to an external network. The core network device 103 includes an Access and Mobility management Function (AMF) to support terminals with different mobility management requirements. AMF can perform at least one of following tasks: Non-Access Stratum (NAS) signaling terminal; NAS signaling security; access layer security control; signaling between core network nodes for mobility between 3GPP access networks; accessibility of idle mode terminal (including control and execution of paging retransmission); registration area management; mobility support within and between systems; access authentication; access authorization, including roaming permission check; mobility management control (subscriptions and policies); network slicing support; Session Management Function (SMF) selection.

The core network device 103 includes a User Plane Function (UPF). The UPF can perform at least one of following tasks: anchor points for intra-system and inter-system movement; an external Protocol Data Unit (PDU) session point connected to the data network; packet routing and forwarding; package checking and user plane policy rule execution part; traffic usage report; uplink classifier for supporting the routing of traffic flows to a data network; branching point supporting the multi-homed PDU session; Quality of Service (QoS) processing of user plane, such as packet filtering, gating, uplink and downlink rate implementation; uplink service verification; downlink packet buffering and downlink data notification triggering.

The core network device 103 includes a location management function network element. Optionally, the location management function network element includes a location server, which can be implemented as any one of the following: LMF (Location Management Function), E-SMLC (Enhanced Serving Mobile Location Centre), SUPL (Secure User Plane Location), SUPL SLP (SUPL Location Platform). LPP (LTE Positioning Protocol) is used for communication transmission between the terminal device and the location server.

The core network device 103 also includes other network functions, such as session management, Network Repository Function (NRF), Network Exposure Function (NEF), and Unified Data Management (UDM), etc.

The access network device 102 and the core network device 103 may be collectively referred to as the network device. For example, the network device in the embodiments of the application may refer to the access network device and/or the core network device. The core network device 103 and the access network device 102 communicate with each other through a certain technology, and a communication relationship can be established between the user terminal 101 and the core network device 103 through the access network device 102.

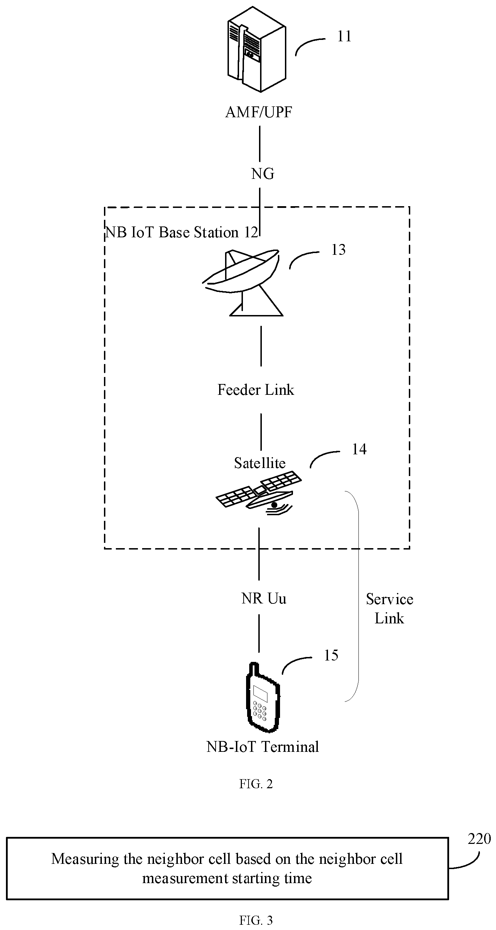

The "5G NR system" in the embodiments of the present application can also be called 5G system or NR system, which can be understood by those skilled in the art. For example, the communication system provided by an embodiment of the present application may be an NB IoT NTN system, as shown in FIG. 2, which shows a schematic diagram of an NB IoT NTN network provided by an exemplary embodiment of the present application. The NB-IoT base station 12 consists of a terrestrial gateway 13 and a satellite 14, and a feeder link is formed between the terrestrial gateway 13 and the satellite 14 to implement communication between the terrestrial gateway 13 and the satellite 14. The NB-IoT terminal 15 communicates with the satellite 14 through an air interface (such as NR Uu), and a service link is formed between the satellite 14 and the NB-IoT terminal 15, thereby implementing communication with the NB-IoT base station 12. The function of the NB-IoT base station 12 can also be completely implemented by the satellite 14. The core network device 11 is equipped with AMF/UPF, and communicates with the NB-IoT base station 12 through the air interface (such as NG interface). For example, the core network device 11 communicates with the terrestrial gateway 13 through NG interface.

The technical solution described in the embodiments of the application can be applied to the 5G NR system and the subsequent evolution system of the 5G NR system.

FIG. 3 shows a flowchart of the method for measuring the neighbor cell provided by an embodiment of the present application. The method is performed by the terminal shown in FIG. 1. Exemplary, the terminal may be a UE in the connected states. The method includes a following step.

In step 220, the neighbor cell is measured based on a neighbor cell measurement starting time.

The neighbor cell measurement starting time is the time threshold used to trigger neighbor cell measurement. For example, the terminal determines whether to perform neighbor cell measurement based on a time sequence relationship between the time of the terminal and the neighbor cell measurement starting time.

Exemplarily, the neighbor cell measurement starting time is a first time threshold. The terminal measures the neighbor cell based on the time of the terminal and the first time threshold.

In some optional embodiments, the neighbor cell measurement starting time is configured for the terminal by the network device.

Optionally, the first time threshold can be directly configured for the terminal by the network device.

Optionally, the first time threshold may be determined based on a first time and a first offset value. The network device configures the first time and the first offset value for the terminal, and the terminal determines the first time threshold based on the first time and the first offset value. For example, the terminal determines the time obtained by shifting the first time by the first offset value as the first time threshold.

In some optional embodiments, the way for the terminal to measure the neighbor cell includes at least one of the following.
· When the time of the terminal is later than or equal to the first time threshold, the terminal measures the neighbor cell.

The neighbor cell is measured at the time of the terminal when the time of the terminal is later than or equal to the first time threshold. If the time of the terminal is not the measurement time for the neighbor cell measurement, the terminal can also determine the measurement time for the neighbor cell measurement first, and measure the neighbor cell at the measurement time. The above measurement time is later than or equal to the time of the terminal.

Exemplarily, when the time of the terminal is equal to the first time threshold, the terminal measures the neighbor cell, which can be understood as measuring the neighbor cell at the time of the terminal when the time of the terminal reaches the first time threshold.

Exemplarily, the terminal measures the neighbor cell when the time of the terminal is later than the first time threshold, which can be understood as measuring the neighbor cell after the first time threshold when the time of the terminal reaches the first time threshold. Optionally, it can be understood as measuring the neighbor cell after the first time threshold when the time of the terminal reaches a time after the first time threshold backward shifted by a first threshold offset value. Optionally, it can be understood as measuring the neighbor cell after the first time threshold when the time of the terminal falls within a first time interval; and the first time interval is an interval between the first time threshold and the time after the first time threshold backward shifted by the first threshold offset value. The backward shifting refers to shifting the time toward a direction later than the first time threshold. Optionally, the first threshold offset value is configured for the terminal by the network device.
· The terminal measures the neighbor cell before first time threshold.

The neighbor cell is measured before the first time threshold when the time of the terminal is earlier than the first time threshold. For example, the terminal can directly measure the neighbor cell at the time of the terminal. If the time of the terminal is not the measurement time for the neighbor cell measurement, the terminal can also determine the measurement time for the neighbor cell measurement first, and measure the neighbor cell at the measurement time. The measurement time is later than or equal to the time of the terminal and earlier than the first time threshold.

Exemplarily, the terminal measures the neighbor cell when the time of the terminal is earlier than the first time threshold, which can be understood as that the terminal measures the neighbor cell before the first time threshold when the time of the terminal reaches a time obtained by forwardly shifting the first time threshold by a second threshold offset value. Optionally, it can be understood as measuring the neighbor cell before the first time threshold when the time of the terminal falls with a second time interval; and the second time interval is the interval between the time obtained by forwardly shifting the first time threshold by the second threshold offset value and the first time threshold. The above-mentioned forward shifting refers to shifting the time toward a direction earlier than the first time threshold. Optionally, the second threshold offset value is configured for the terminal by the network device.

It should be noted that, when referring to the time of the terminal is equal to the first time threshold, it means that the time of the terminal reaches the first time threshold. When referring to that the time of the terminal is later than the first time threshold, it means that the time of the terminal reaches the time after the first time threshold backward shifted by the first threshold offset value; or it means that the time of the terminal falls within the time interval between the first time threshold and the time after the first time threshold backward shifted by the first threshold offset value. When referring to that the time of the terminal is earlier than the first time threshold, it means that the time of the terminal reaches the time obtained by forwardly shifting the first time threshold by the second threshold offset value; or it means that the time of the terminal falls within the time interval between the time obtained by forwardly shifting the first time threshold by the second threshold offset value and the first time threshold.

In some optional embodiments, neighbor cell measurements include at least one of an intra-frequency neighbor cell measurement and an inter-frequency neighbor cell measurement.

Optionally, the same first time threshold is used for the intra-frequency neighbor cell measurement and the inter-frequency neighbor cell measurement.

Optionally, different first time thresholds are used for the intra-frequency neighbor cell measurement and the inter-frequency neighbor cell measurement, the first time threshold includes at least one of the following.
· A time threshold for measuring an intra-frequency neighbor cell.

During the intra-frequency neighbor cell measurement, the terminal triggers the intra-frequency measurement of neighbor cell based on the time threshold for the intra-frequency neighbor cell measurement.

For example, the terminal performs an intra-frequency measurement on the neighbor cell based on the time of the terminal and the time threshold for the intra-frequency neighbor cell measurement. When the time of the terminal is later than or equal to the time threshold for the intra-frequency neighbor cell measurement, the intra-frequency measurement is performed on the neighbor cell. Alternatively, when the time of the terminal is earlier than the time threshold for the intra-frequency neighbor cell measurement, the intra-frequency measurement is performed on the neighbor cell before the time threshold for the intra-frequency neighbor cell measurement.
· A time threshold for measuring an inter-frequency neighbor cell.

During the inter-frequency neighbor cell measurement, the terminal triggers the inter-frequency measurement of neighbor cell based on the time threshold for the inter-frequency neighbor cell measurement.

For example, the terminal performs an inter-frequency measurement on the neighbor cell based on the time of the terminal and the time threshold for the inter-frequency neighbor cell measurement. When the time of the terminal is later than or equal to the time threshold for the inter-frequency neighbor cell measurement, the inter-frequency measurement is performed on the neighbor cell. Alternatively, when the time of the terminal is earlier than the time threshold for the inter-frequency neighbor cell measurement, the inter-frequency measurement is performed on the neighbor cell before the time threshold for the inter-frequency neighbor cell measurement.

In some optional embodiments, the time threshold can also be associated with a reference location. As the location changes, the terminal will apply different time thresholds to trigger the terminal to measure the neighbor cell. For example, the time thresholds associated with the reference locations of different cells may be different. For example, the time thresholds associated with different reference locations in the same cell may be different.

There are also cases where the time thresholds associated with different reference locations are the same. For example, the time thresholds associated with reference locations in different cells can be the same. For another example, the time thresholds associated with different reference locations in the same cell may be the same.

Optionally, the time threshold for starting neighbor cell measurement may be a time threshold configured for the terminal by the network device based on the location of the terminal and the correlation between time thresholds and reference locations, or a time threshold determined by the terminal based on the location of the terminal and the correlation between time thresholds and reference locations.

The first time threshold is associated with a first reference location, and the first time threshold is applied when the terminal is located at the first reference location. Before the neighbor cell measurement, the terminal determines the actual neighbor cell measurement starting time according to the location of the terminal, the first time threshold and its associated first reference location.

As the terminal moves, the terminal moves away from the first reference location, and the network device reconfigures the time threshold for the terminal to start the neighbor cell measurement, or the terminal redetermines the time threshold for starting the neighbor cell measurement. For example, the network device configures a second time threshold for the terminal based on the location of the terminal and the correlation between the reference locations and the time thresholds. Optionally, the terminal determines the second time threshold based on the location of the terminal and the correlation between the reference locations and the time thresholds.

After the second time threshold is determined, the terminal measures the neighbor cell based on the time of the terminal and the second time threshold. The implementation of this measurement process can refer to the above-mentioned implementation process of triggering neighbor cell measurement based on the first time threshold. The first time threshold and the second time threshold may be the same or different.

Exemplarily, the time threshold may be a time point.

In some optional embodiments, the time of the terminal includes at least one of the following.
· A local time of the terminal.

For example, the local time of the terminal may be Universal Time Coordinated (UTC).
· A time obtained by the terminal from Global Navigation Satellite System (GNSS).
· A time obtained by the terminal from the network device.
· A scheduled time of the terminal for measuring the neighbor cell.

The scheduled time of the terminal for measuring the neighbor cell may be the measurement time autonomously determined by the terminal for measuring neighbor cell.

To sum up, based on the method for measuring neighbor cell provided in some embodiments, the neighbor cell measurement can be triggered based on the time of the terminal and the neighbor cell measurement starting time. For example, the neighbor cell is measured when the time of the terminal is later than or equal to the neighbor cell measurement starting time, thereby implementing the neighbor cell measurement triggered based on time.

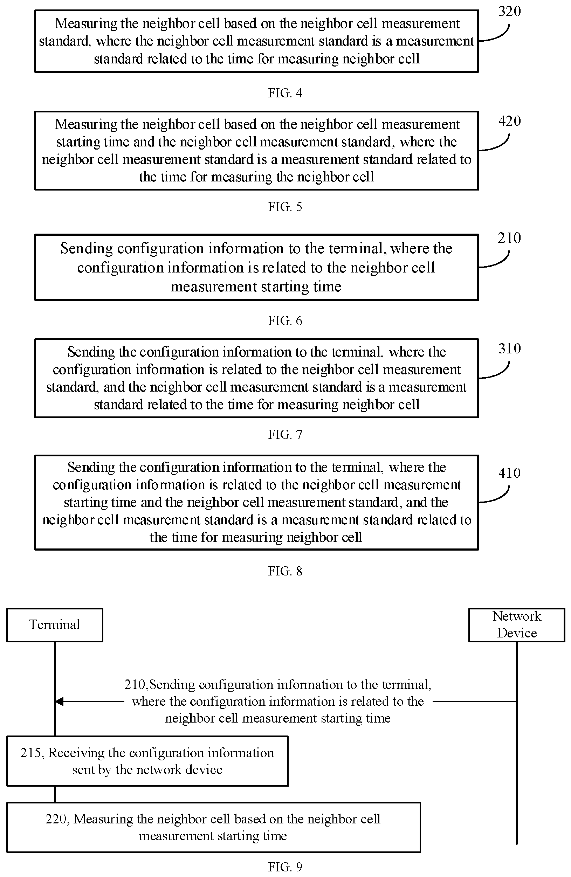

FIG. 4 shows a flowchart of the method for measuring the neighbor cell provided by an embodiment of the present application. The method is performed by the terminal shown in FIG. 1. Exemplarily, the terminal may be a UE in the connected state. The method includes a following step.

In step 320, the neighbor cell is measured based on a neighbor cell measurement standard, where the neighbor cell measurement standard is a measurement standard related to the time for measuring the neighbor cell.

The neighbor cell measurement standard is a standard for triggering neighbor cell measurement based on the time of the terminal. The terminal determines whether the time of the terminal meets the neighbor cell measurement standard. The neighbor cell is measured when the time of the terminal meets the neighbor cell measurement standard.

The neighbor cell measurement standard includes a neighbor cell measurement standard parameter.

In some optional embodiments, the neighbor cell measurement standard parameter is a time threshold for the neighbor cell measurement standard.

Optionally, the time threshold for the neighbor cell measurement standard includes at least one of:
a third time threshold; and
a fourth time threshold.

Accordingly, the neighbor cell measurement standard includes at least one of the following.
· A difference between a time of the terminal and a service providing time of an upcoming satellite is less than or equal to the third time threshold.

The above service providing time of the upcoming satellite refers to a time for the upcoming satellite to provide service for the terminal.

· The time of the terminal is later than the fourth time threshold.

For example, the terminal measures the neighbor cell when the difference between the time of the terminal and the service providing time of the upcoming satellite is less than or equal to the third time threshold. Exemplarily, the third time threshold may be configured as 0.

Alternatively, the terminal measures the neighbor cell when the time of the terminal is later than the fourth time threshold.

Exemplarily, upon referring to that the terminal measures the neighbor cell when the time of the terminal is later than the fourth time threshold, it can be understood as measuring the neighbor cell when the time of the terminal reaches the fourth time threshold. Alternatively, it can be understood that the terminal measures the neighbor cell when the time of the terminal reaches a time after the fourth time threshold backward shifted by a third threshold offset value. Alternatively, it can be understood that the terminal measures the neighbor cell when the time of the terminal fall within a third time interval, where the third time interval is an interval between the fourth time threshold and a time after the fourth time threshold backward shifted by the third threshold offset value. Alternatively, the third threshold offset value is configured for the terminal by the network device.

It should be noted that, when referring to that the time of the terminal is equal to the fourth time threshold, it means that the time of the terminal reaches the fourth time threshold. When referring to that the time of the terminal is later than the fourth time threshold, it means that the time of the terminal reaches the time after the fourth time threshold backward shifted by the third threshold offset value; or, it means that the time of the terminal falls within the time interval between the fourth time threshold and the time after the fourth time threshold backward shifted by the third threshold offset value.

In some optional embodiments, the terminal starts or restarts a timer when the time of the terminal meets the neighbor cell measurement standard. The terminal measures the neighbor cell during the running of the timer.

For example, the terminal starts or restarts the timer when the difference between the time of the terminal and the service providing time of the upcoming satellite is less than or equal to the third time threshold, and measures the neighbor cell during the running of the timer. Alternatively, the terminal starts or restarts the timer when the time of the terminal is later than the fourth time threshold, and measures the neighbor cell during the running of the timer.

Optionally, the above timer may be a T326 timer.

In some optional embodiments, the neighbor cell measurement standard parameters are configured for the terminal by the network device.

In some optional embodiments, neighbor cell measurements include at least one of the intra-frequency neighbor cell measurement and the inter-frequency neighbor cell measurement.

Optionally, the terminal may adopt the same time threshold in the scenes of the intra-frequency neighbor cell measurement and the inter-frequency neighbor cell measurement.

Alternatively, the terminal can also adopt different time thresholds in the scenes of the intra-frequency neighbor cell measurement and the inter-frequency neighbor cell measurement. For example, the third time threshold includes at least one of: a first sub-threshold used for the intra-frequency neighbor cell measurement; and a second sub-threshold used for the inter-frequency neighbor cell measurement. For another example, the fourth time threshold includes at least one of: a third sub-threshold used for the intra-frequency neighbor cell measurement; and a fourth sub-threshold used for the inter-frequency neighbor cell measurement.

In some optional embodiments, the time threshold can also be associated with the reference location. As the location changes, the terminal will apply different time thresholds to trigger the terminal to measure the neighbor cell. For example, the time thresholds associated with the reference locations of different cells may be different. For example, the time thresholds associated with different reference locations in the same cell may be different.

There are also cases where the time thresholds associated with different reference locations are the same. For example, the time thresholds associated with reference locations in different cells can be the same. For another example, the time thresholds associated with different reference locations in the same cell may be the same.

Optionally, the above time threshold may be the time threshold configured for the terminal by the network device based on the location of the terminal and the correlation between time thresholds and reference locations, or the time threshold determined by the terminal based on the location of the terminal and the correlation between time thresholds and reference locations.

For example, the third time threshold can be determined based on the location of the terminal and a first correlation between time thresholds and reference locations. For another example, the fourth time threshold can be determined based on the location of the terminal and a second correlation between time thresholds and reference locations.

Exemplarily, the time threshold may be a time point.

In some optional embodiments, the time of the terminal includes at least one of the following.
· The local time of the terminal.

For example, the local time of the terminal may be the UTC.
· The time obtained by the terminal from the GNSS.
· The time obtained by the terminal from the network device.
· The scheduled time of the terminal for measuring the neighbor cell.

The scheduled time of the terminal for measuring the neighbor cell may be the measurement time autonomously determined by the terminal for measuring neighbor cell.

To sum up, based on the method for measuring neighbor cell provided in some embodiments, the neighbor cell measurement can be triggered based on the time of the terminal and the neighbor cell measurement standard. For example, the neighbor cell is measured when the time of the terminal meets the neighbor cell measurement standard, thereby implementing the neighbor cell measurement triggered based on time.

FIG. 5 shows a flowchart of the method for measuring the neighbor cell provided by an embodiment of the present application. The method is performed by the terminal shown in FIG. 1. Exemplarily, the terminal may be UE in the connected state. The method includes a following step.

In step 420, the neighbor cell is measured based on the neighbor cell measurement starting time and the neighbor cell measurement standard, where the neighbor cell measurement standard is a measurement standard related to the time for measuring the neighbor cell.

The neighbor cell measurement starting time is the time threshold for triggering neighbor cell measurement in cooperation with the neighbor cell measurement standard. Exemplarily, the neighbor cell measurement starting time may be the first time threshold.

In some optional embodiments, the neighbor cell measurement starting time is configured for the terminal by the network device.

Exemplarily, the neighbor cell measurement standard is the standard for triggering neighbor cell measurement in cooperation with the neighbor cell measurement starting time.

The neighbor cell measurement standard includes the neighbor cell measurement standard parameter.

In some optional embodiments, the neighbor cell measurement standard parameter is configured by the network device for the terminal.

Optionally, the neighbor cell measurement standard parameter is the time threshold used for the neighbor cell measurement standard.

Optionally, the time threshold used for the neighbor cell measurement standard includes at least one of:
the third time threshold; and
the fourth time threshold.

Accordingly, the neighbor cell measurement standard includes at least one of the following.
· The difference between the time of the terminal and the service providing time of the upcoming satellite is less than or equal to the third time threshold.

The service providing time of the upcoming satellite refers to the time for the upcoming satellite to provide service for the terminal. Exemplarily, the third time threshold may be configured as 0.
· The time of the terminal is later than the fourth time threshold.

In some optional embodiments, the above time threshold may be configured for the terminal by the network device.

The above time threshold may be the time threshold directly configured for the terminal by the network device. Alternatively, the above time threshold can also be the time and the offset value configured for the terminal by the network device, and the time threshold is determined by the terminal based on the above time and offset value, that is, the time threshold is determined based on the above time and offset value.

For example, the terminal determines the time point obtained by shifting the first time by the first offset value as the first time threshold. For example, the terminal determines the time point obtained by shifting the second time by the second offset value as the second time threshold. For example, the terminal determines the time point obtained by shifting the third time by the third offset value as the third time threshold. For example, the terminal determines the time point obtained by shifting the fourth time by the fourth offset value as the fourth time threshold.

In some optional embodiments, neighbor cell measurements include at least one of the intra-frequency neighbor cell measurement and the inter-frequency neighbor cell measurement.

Optionally, the terminal may adopt the same time threshold in the scenes of the intra-frequency neighbor cell measurement and the inter-frequency neighbor cell measurement.

Alternatively, the terminal can also adopt different time thresholds in the scenes of the intra-frequency neighbor cell measurement and the inter-frequency neighbor cell measurement. For example, the first time threshold includes at least one of: a fifth sub-threshold used for the intra-frequency neighbor cell measurement; and a sixth sub-threshold used for the inter-frequency neighbor cell measurement. For example, the third time threshold includes at least one of: the first sub-threshold f used or the intra-frequency neighbor cell measurement; and the second sub-threshold used for the inter-frequency neighbor cell measurement. For another example, the fourth time threshold includes at least one of: the third sub-threshold used for the intra-frequency neighbor cell measurement; and the fourth sub-threshold used for the inter-frequency neighbor cell measurement.

In some optional embodiments, the time threshold can also be associated with the reference location. As the location changes, the terminal will apply different time thresholds to trigger the terminal to measure the neighbor cell. For example, the time thresholds associated with the reference locations of different cells may be different. For example, the time thresholds associated with different reference locations in the same cell may be different.

There are also cases where the time thresholds associated with different reference locations are the same. For example, the time thresholds associated with reference locations in different cells can be the same. For another example, the time thresholds associated with different reference locations in the same cell may be the same.

Optionally, the above time threshold may be the time threshold configured for the terminal by the network device based on the location of the terminal and the correlation between time thresholds and reference locations, or the time threshold determined by the terminal based on the location of the terminal and the correlation between time thresholds and reference locations.

For example, the first time threshold can be determined based on the location of the terminal and a third correlation between time thresholds and reference locations. For example, the third time threshold can be determined based on the location of the terminal and the first correlation between time thresholds and reference locations. For another example, the fourth time threshold can be determined based on the location of the terminal and the second correlation between time thresholds and reference locations.

Exemplarily, the time threshold may be a time point.

The neighbor cell is measured when the time of the terminal meets the neighbor cell measurement starting time and the neighbor cell measurement standard.

Optionally, the terminal measures the neighbor cell when the time of the terminal is later than or equal to the first time threshold, and the time of the terminal meets the neighbor cell measurement standard. For example, the terminal measures the neighbor cell when the time of the terminal is later than or equal to the first time threshold, and the difference between the time of the terminal and the service providing time of the upcoming satellite is less than or equal to the third time threshold.

Optionally, the terminal measures the neighbor cell before the first time threshold when the time of the terminal meets the neighbor cell measurement standard. For example, the neighbor cell is measured before the first time threshold when the difference between the time of the terminal and the service providing time of the upcoming satellite is less than or equal to the third time threshold. Alternatively, the neighbor cell is measured before the first time threshold when the time of the terminal is later than the fourth time threshold. When referring to that the first time threshold is later than the fourth time threshold, it can also be described as that the first time threshold is greater than the fourth time threshold.

In some optional embodiments, the terminal starts or restarts a timer when the time of the terminal meets the neighbor cell measurement standard. During the running of the timer, the terminal measures the neighbor cell based on the neighbor cell measurement starting time.

Optionally, the terminal starts or restarts the timer when the time of the terminal meets the neighbor cell measurement standard. During the running of the timer, the neighbor cell is measured when it is determined that the time of the terminal is later than or equal to the first time threshold. For example, the terminal starts or restarts the timer when the difference between the time of the terminal and the service providing time of the upcoming satellite is less than or equal to the third time threshold. During the running of the timer, the neighbor cell is measured when it is determined that the time of the terminal is later than or equal to the first time threshold.

Optionally, the terminal starts or restarts the timer when the time of the terminal meets the neighbor cell measurement standard. During the running of the timer, the terminal measures the neighbor cell before the first time threshold. For example, the terminal starts or restarts the timer when the difference between the time of the terminal and the time of the terminal and the service providing time of the upcoming satellite is less than or equal to the third time threshold. During the running of the timer, the terminal measures the neighbor cell before the first time threshold. Alternatively, the terminal starts or restarts the timer when the time of the terminal is later than the fourth time threshold. During the running of the timer, the terminal measures the neighbor cell before the first time threshold. When referring to that the first time threshold is later than the fourth time threshold, it can also be described as that the first time threshold is greater than the fourth time threshold.

Optionally, the above timer may be a T326 timer.

In some optional embodiments, during the running of the timer, the terminal measures the neighbor cell based on the neighbor cell measurement starting time when the time of the terminal meets the neighbor cell measurement standard.

Optionally, during the running of the timer, the neighbor cell is measured when the time of the terminal meets the neighbor cell measurement standard and it is determined that the time of the terminal is later than or equal to the first time threshold.

Optionally, during the running of the timer, the terminal measures the neighbor cell before the first time threshold when the time of the terminal meets the neighbor cell measurement standard and it is determined that the time of the terminal is earlier than the first time threshold.

In an optional embodiment, the terminal has started or restarted the timer before determining whether the time of the terminal meets the neighbor cell measurement standard. Optionally, the above timer may be the T326 timer.

Optionally, the above neighbor cell measurement standard may be the neighbor cell measurement standard specified in R17.

It should also be noted that when the terminal measures the neighbor cell before the first time threshold, the time of the terminal being earlier than the first time threshold is to be satisfied.

It should be noted that, when referring to that the time of the terminal is equal to the time threshold, it means that the time of the terminal reaches the time threshold. When referring to that the time of the terminal is later than the time threshold, it means that the time of the terminal reaches the time after the time threshold backward shifted by the threshold offset value; or, it means that the time of the terminal falls within the time interval between the time threshold and the time after the time threshold backward shifted by the threshold offset value. When referring to that the time of the terminal is earlier than the time threshold, it means that the time of the terminal reaches the time obtained by forward shifting the time threshold by the threshold offset value; or, it means that the time of the terminal falls within the time interval between the time obtained by forward shifting the time threshold by the threshold offset value and the time threshold. Optionally, the threshold offset value is configured for the terminal by the network device.

In some optional embodiments, the time of the terminal includes at least one of the following.
· The local time of the terminal.

For example, the local time of the terminal may be the UTC.
· The time obtained by the terminal from the GNSS.
· The time obtained by the terminal from the network device.
· The scheduled time of the terminal for performing the neighbor cell measurement.

The scheduled time of the terminal for performing the neighbor cell measurement may be the measurement time autonomously determined by the terminal for performing the neighbor cell measurement.

To sum up, based on the method for measuring neighbor cell provided in this embodiment, the neighbor cell measurement can be triggered based on the time of the terminal, the neighbor cell measurement starting time and the neighbor cell measurement standard. For example, the neighbor cell is measured when the time of the terminal is later than or equal to the neighbor cell measurement starting time, and the time of the terminal meets the neighbor cell measurement standard, thereby implementing the neighbor cell measurement triggered based on time.

FIG. 6 shows a flowchart of the method for measuring the neighbor cell provided by an embodiment of the present application. The method is performed by the network device shown in FIG. 1. The method includes a following step.

In step 210, configuration information is sent to the terminal, where the configuration information is related to the neighbor cell measurement starting time.

The above configuration information includes the neighbor cell measurement starting time. The neighbor cell measurement starting time is the time threshold used to trigger neighbor cell measurement.

The neighbor cell measurement starting time is the first time threshold. Optionally, the first time threshold is used to trigger the terminal to measure the neighbor cell when it is earlier than or equal to the time of the terminal. Optionally, the first time threshold is used to trigger the terminal to measure the neighbor cell before the first time threshold when it is later than the time of the terminal.

It should be noted that, when referring to that the time of the terminal is equal to the first time threshold, it means that the time of the terminal reaches the first time threshold. When referring to that the time of the terminal is later than the first time threshold, it means that the time of the terminal reaches the time after the first time threshold backward shifted by the first threshold offset value; or, it means that the time of the terminal falls within the time interval between the first time threshold and the time after the first time threshold backward shifted by the first threshold offset value. When referring to that the time of the terminal is earlier than the first time threshold, it means that the time of the terminal reaches the time obtained by forwardly shifting the first time threshold by the second threshold offset value; or, it means that the time of the terminal falls within the time interval between the time obtained by forwardly shifting the first time threshold by the second threshold offset value and the first time threshold. Optionally, the above first threshold offset value and/or the above second threshold offset value are configured for the terminal by the network device. Optionally, the above configuration information includes the first threshold offset value and/or the second threshold offset value.

In some optional embodiments, the network device can directly configure the first time threshold for the terminal. Alternatively, the network device can configure the first time and the first offset value for the terminal, and the terminal determines the first time threshold based on the first time and the first offset value. For example, the terminal determines the time obtained by shifting the first time by the first offset value as the first time threshold.

In some optional embodiments, neighbor cell measurements include at least one of the intra-frequency neighbor cell measurement and the inter-frequency neighbor cell measurement.

Optionally, the same first time threshold is configured for the intra-frequency neighbor cell measurement and the inter-frequency neighbor cell measurement. Alternatively, different first time thresholds are configured for the intra-frequency neighbor cell measurement and the inter-frequency neighbor cell measurement, and the first time threshold(s) configured for the terminal by the network device includes at least one of:
the time threshold for measuring the intra-frequency neighbor cell; and
the time threshold for measuring the inter-frequency neighbor cell.

In some optional embodiments, the time threshold can also be associated with the reference location. Different reference locations may be associated with different time thresholds. For example, the time thresholds associated with reference locations in different cells can be different. For example, the time thresholds associated with different reference locations in the same cell may be different.

There are also cases where the time thresholds associated with different reference locations are the same. For example, the time thresholds associated with reference locations in different cells can be the same. For another example, the time thresholds associated with different reference locations in the same cell may be the same.

The network device can configure the first time threshold for the terminal based on the location of the terminal and the correlation between time thresholds and reference locations.

Alternatively, the above configuration information further includes the reference location associated with the time threshold. The network device configures the time threshold for the terminal and also configures the reference location associated with the time threshold for the terminal. The terminal determines the first time threshold based on the location of the terminal and the correlation between time thresholds and reference locations.

Optionally, the configuration information may be sent via a system message and/or an RRC message.

To sum up, in the method for measuring neighbor cell provided in some embodiments, the network device sends the configuration information related to the neighbor cell measurement starting time to the terminal, thereby supporting the terminal to implement the neighbor cell measurement triggered based on time.

FIG. 7 shows a flowchart of the method for measuring the neighbor cell provided by an embodiment of the present application. The method is performed by the network device shown in FIG. 1. The method includes a following step.

In step 310, configuration information is sent to the terminal, where the configuration information is related to the neighbor cell measurement standard, and the neighbor cell measurement standard is the measurement standard related to the time for measuring neighbor cell.

The above configuration information includes the neighbor cell measurement standard parameter. The neighbor cell measurement standard is the standard for triggering neighbor cell measurement based on the time of the terminal. The neighbor cell measurement standard parameter is a parameter in neighbor cell measurement standard.

In some optional embodiments, the neighbor cell measurement standard parameter is the time threshold used for the neighbor cell measurement standard.

Optionally, the time threshold used for the neighbor cell measurement standard includes at least one of the following.
· The third time threshold, which is used to trigger the terminal to measure neighbor cell when the third time threshold is greater than or equal to the difference between the time of the terminal and the service providing time of the upcoming satellite.
· The fourth time threshold, which is used to trigger the terminal to measure neighbor cell when the fourth time threshold is less than or equal to the time of the terminal.

Accordingly, the above neighbor cell measurement standard includes at least one of the following.
· The difference between the time of the terminal and the service providing time of the upcoming satellite is less than or equal to the third time threshold.
· The time of the terminal is later than the fourth time threshold.

In some optional embodiments, the above configuration information also includes the service providing time of the upcoming satellite, which is used to trigger the terminal to measure the neighbor cell when the difference between the time of the terminal and the service providing time of the upcoming satellite is less than or equal to the third time threshold.

Exemplarily, the above configuration information includes the third time threshold and the service providing time of the upcoming satellite. Accordingly, the neighbor cell measurement standard includes that the difference between the time of the terminal and the service providing time of the upcoming satellite is less than or equal to the third time threshold.

It should be noted that, when referring to that the time of the terminal is equal to the fourth time threshold, it means that the time of the terminal reaches the fourth time threshold. When referring to that the time of the terminal is later than the fourth time threshold, it means that the time of the terminal reaches the time after the fourth time threshold backward shifted by the third threshold offset value; or, it means that the time of the terminal falls within the time interval between the fourth time threshold and the time after the fourth time threshold backward shifted by the third threshold offset value. Optionally, the third threshold offset value is configured for the terminal by the network device. Optionally, the above configuration information includes the above third threshold offset value.

In some optional embodiments, neighbor cell measurements include at least one of the intra-frequency neighbor cell measurement and the inter-frequency neighbor cell measurement.

Optionally, the same time threshold can be configured by the network device for the terminal in the scenes of the intra-frequency neighbor cell measurement and the inter-frequency neighbor cell measurement. Alternatively, the network device can also configure the terminal with different time thresholds in the scenes of the intra-frequency neighbor cell measurement and the inter-frequency neighbor cell measurement. For example, the third time threshold includes at least one of: the first sub-threshold used for the intra-frequency neighbor cell measurement; and the second sub-threshold used for the inter-frequency neighbor cell measurement. For another example, the fourth time threshold includes at least one of: the third sub-threshold used for the intra-frequency neighbor cell measurement; and the fourth sub-threshold used for the inter-frequency neighbor cell measurement.

In some optional embodiments, the time threshold can be directly configured by the network device for the terminal. Alternatively, the terminal can be configured with a time and an offset value, and the terminal can determine the time threshold based on the above time and offset value. For example, the network device configures a third time and a third offset value for the terminal, and the terminal determines the time obtained by shifting the third time by the third offset value as the third time threshold; and/or, the network device configures a fourth time and a fourth offset value for the terminal, and the terminal determines the time obtained by shifting the fourth time by the fourth offset value as the fourth time threshold.

In some optional embodiments, the time threshold can also be associated with the reference location. Different reference locations may be associated with different time thresholds. For example, the time thresholds associated with reference locations in different cells can be different. For example, the time thresholds associated with different reference locations in the same cell may be different.

There are also cases where the time thresholds associated with different reference locations are the same. For example, the time thresholds associated with reference locations in different cells can be the same. For another example, the time thresholds associated with different reference locations in the same cell may be the same.

Optionally, the network device may configure the third time threshold for the terminal based on the location of the terminal and the first correlation between time thresholds and reference locations; and/or, the network device may configure the fourth time threshold for the terminal based on the location of the terminal and the second correlation between time thresholds and reference locations.

Optionally, the above configuration information further includes the reference location associated with the time threshold. The network device configures the time threshold for the terminal and also configures the reference location associated with the time threshold for the terminal. The terminal determines the third time threshold based on the location of the terminal and the first correlation between time thresholds and reference locations; and/or, the terminal determines the fourth time threshold based on the location of the terminal and the second correlation between time thresholds and reference locations.

Optionally, the configuration information may be sent via the system message and/or the RRC message.

To sum up, in the method for measuring neighbor cell provided in this embodiment, the network device sends the configuration information related to the neighbor cell measurement standard for starting neighbor cell measurement to the terminal, thereby supporting the terminal to implement the neighbor cell measurement triggered based on time.

FIG. 8 shows a flowchart of the method for measuring the neighbor cell provided by an embodiment of the present application. The method is performed by the network device shown in FIG. 1. The method includes a following step.

In step 410, the configuration information is sent to the terminal, where the configuration information is related to the neighbor cell measurement starting time and the neighbor cell measurement standard, and the neighbor cell measurement standard is the measurement standard related to the time for measuring neighbor cell.

The above configuration information includes the neighbor cell measurement starting time and the neighbor cell measurement standard parameter.

The neighbor cell measurement starting time is the time threshold used to trigger neighbor cell measurement. Exemplarily, the neighbor cell measurement starting time is the first time threshold. Optionally, the first time threshold is used to trigger the terminal to measure the neighbor cell when it is earlier than or equal to the time of the terminal and the time of the terminal meets the neighbor cell measurement standard. Alternatively, the first time threshold is used to trigger the terminal to measure the neighbor cell before the first time threshold when it is later than the time of the terminal and the time of the terminal meets the neighbor cell measurement standard.

The neighbor cell measurement standard is the standard for triggering neighbor cell measurement based on the time of the terminal. The neighbor cell measurement standard parameter is the parameter in neighbor cell measurement standard.

Optionally, the neighbor cell measurement standard parameter is the time threshold for the neighbor cell measurement standard.

Optionally, the time threshold for the neighbor cell measurement standard includes at least one of the following.
· The third time threshold, which is used to trigger the terminal to measure neighbor cell based on the neighbor cell measurement starting time when the third time threshold is greater than or equal to the difference between the time of the terminal and the service providing time of the upcoming satellite.
· The fourth time threshold, which is used to trigger the terminal to measure neighbor cell based on the neighbor cell measurement starting time when the fourth time threshold is less than or equal to the time of the terminal.

Accordingly, the above neighbor cell measurement standard includes at least one of the following.
· The difference between the time of the terminal and the service providing time of the upcoming satellite is less than or equal to the third time threshold.
· The time of the terminal is later than the fourth time threshold.

Optionally, triggering the terminal to measure neighbor cell based on the neighbor cell measurement starting time includes at least one of the following:
· measuring the neighbor cell when determining that the time of the terminal is later than or equal to the first time threshold.
· measuring the neighbor cell before the first time threshold when determining that the time of the terminal is earlier than the first time threshold.

In some optional embodiments, the above neighbor cell measurement standard parameter also includes the service providing time of the upcoming satellite, which is used to trigger the terminal to measure the neighbor cell based on the neighbor cell measurement starting time when the difference between the time of the terminal and the service providing time of the upcoming satellite is less than or equal to the third time threshold.

Exemplarily, the above neighbor cell measurement standard parameter includes the third time threshold and the service providing time of the upcoming satellite. Accordingly, the neighbor cell measurement standard includes that the difference between the time of the terminal and the service providing time of the upcoming satellite is less than or equal to the third time threshold.

It should be noted that, when referring to that the time of the terminal is equal to the time threshold, it means that that the time of the terminal reaches the time threshold. When referring to that the time of the terminal is later than the time threshold, it means that the time of the terminal reaches the time after the time threshold backward shifted by the threshold offset value; or, it means that the time of the terminal falls within the time interval between the time threshold and the time after the time threshold backward shifted by the threshold offset value. When referring to that the time of the terminal is earlier than the time threshold, it means that the time of the terminal reaches the time obtained by forwardly shifting the time threshold by the threshold offset value; or, it means that the time of the terminal falls within the time interval between the time obtained by forwardly shifting the time threshold by the threshold offset value and the time threshold. Optionally, the threshold offset value is configured for the terminal by the network device. Optionally, the above configuration information includes at least one of the first threshold offset value, the second threshold offset value and the third threshold offset value.

In some optional embodiments, neighbor cell measurements include at least one of the intra-frequency neighbor cell measurement and the inter-frequency neighbor cell measurement.

Optionally, the same time threshold can be configured by the network device for the terminal in the scenes of the intra-frequency neighbor cell measurement and the inter-frequency neighbor cell measurement.

Optionally, the terminal can also configuration different time thresholds in the scenes of the intra-frequency neighbor cell measurement and the inter-frequency neighbor cell measurement. For example, the first time threshold includes at least one of: the fifth sub-threshold used for the intra-frequency neighbor cell measurement; and the sixth sub-threshold used for the inter-frequency neighbor cell measurement. The third time threshold includes at least one of: the first sub-threshold used for the intra-frequency neighbor cell measurement; and the second sub-threshold used for the inter-frequency neighbor cell measurement. For another example, the fourth time threshold includes at least one of: the third sub-threshold used for the intra-frequency neighbor cell measurement; and the fourth sub-threshold used for the inter-frequency neighbor cell measurement.

In some optional embodiments, the network device configure the above time threshold for the terminal.

Optionally, the network device can directly configure the time threshold for the terminal.

Optionally, the terminal can be configured with the time and the offset value, and the terminal can determine the time threshold based on the above time and offset value. For example, the network device configures the first time and the first offset value for the terminal, and the terminal determines the time obtained by shifting the first time by the first offset value as the first time threshold. For example, the network device configures the third time and the third offset value for the terminal, and the terminal determines the time obtained by shifting the third time by the third offset value as the third time threshold; and/or, the network device configures the fourth time and the fourth offset value for the terminal, and the terminal determines the time obtained by shifting the fourth time by the fourth offset value as the fourth time threshold.

In some optional embodiments, the time threshold can also be associated with the reference location. Different reference locations may be associated with different time thresholds. For example, the time thresholds associated with reference locations in different cells can be different. For example, the time thresholds associated with different reference locations in the same cell may be different. There are also cases where the time thresholds associated with different reference locations are the same. For example, the time thresholds associated with reference locations in different cells can be the same. For another example, the time thresholds associated with different reference locations in the same cell may be the same.

Optionally, the network device can configure the first time threshold for the terminal based on the location of the terminal and the third correlation between time thresholds and reference locations. For example, the network device may configure the third time threshold for the terminal based on the location of the terminal and the first correlation between time thresholds and reference locations; and/or, the network device may configure the fourth time threshold for the terminal based on the location of the terminal and the second correlation between time thresholds and reference locations.

Optionally, the above configuration information further includes the reference location associated with the time threshold. The network device configures the time threshold for the terminal and also configures the reference location associated with the time threshold for the terminal. The terminal determines the first time threshold based on the location of the terminal and the third correlation between time thresholds and reference locations. The terminal determines the third time threshold based on the location of the terminal and the first correlation between time thresholds and reference locations; and/or, the terminal determines the fourth time threshold based on the location of the terminal and the second correlation between time thresholds and reference locations.

Optionally, the configuration information may be sent via the system message and/or the RRC message.

To sum up, in the method for measuring neighbor cell provided in this embodiment, the network device sends the configuration information related to the neighbor cell measurement starting time and the neighbor cell measurement standard to the terminal, thereby supporting the terminal to implement the neighbor cell measurement triggered based on time.

The steps of the terminal side and the network device side in the above embodiments can form method embodiments in the interactive manner between the terminal and the network device, as shown in FIG. 9 to FIG. 11.

FIG. 9 shows a flowchart of the method for measuring the neighbor cell provided by an embodiment of the present application. The method is applied to the communication system shown in FIG. 1. Exemplarily, the communication system includes a terminal in the connected state and the network device. The method includes followings steps.

In step 210, the network device sends the configuration information to the terminal, where the configuration information is related to the neighbor cell measurement starting time.

In step 215, the terminal receives the configuration information sent by the network device.

In step 220, the terminal measures the neighbor cell based on the neighbor cell measurement starting time.

The terminal determines the neighbor cell measurement starting time based on the configuration information, and measures the neighbor cell based on the neighbor cell measurement starting time.

For the implementation details of step 210 and step 220, the description in the above embodiments can be referred to, and will not be repeated here.

To sum up, according to the method for measuring neighbor cell provided in this embodiment, the neighbor cell measurement can be triggered based on the time of the terminal and the neighbor cell measurement starting time. For example, the neighbor cell is measured when the time of the terminal is later than or equal to the neighbor cell measurement starting time. Accordingly, the neighbor cell measurement triggered based on time is implemented.

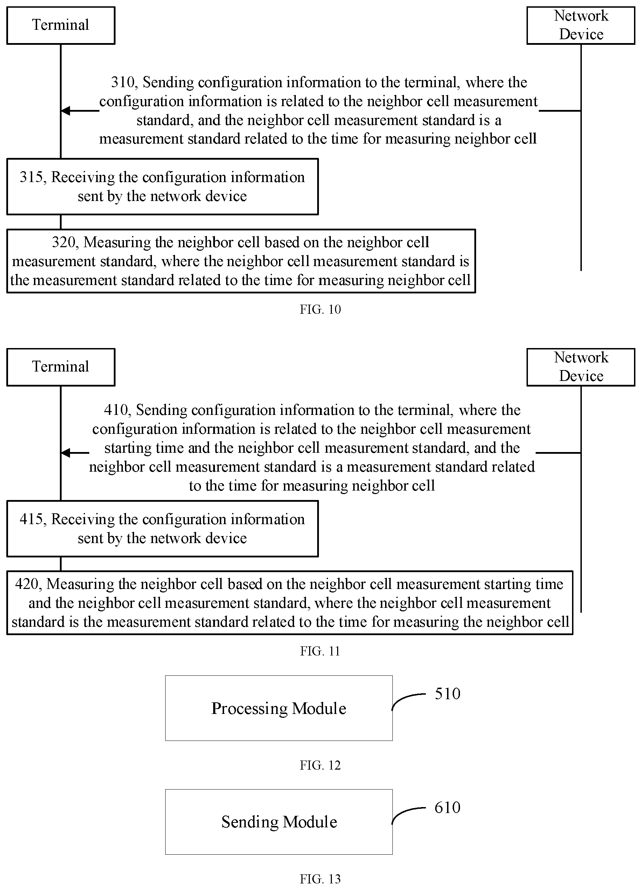

FIG. 10 shows a flowchart of the method for measuring the neighbor cell provided by an embodiment of the present application. The method is applied to the communication system shown in FIG. 1. Exemplarily, the communication system includes a terminal in the connected state and a network device. The method includes following steps.

In step 310, the network device sends the configuration information to the terminal, where the configuration information is related to the neighbor cell measurement standard, and the neighbor cell measurement standard is the measurement standard related to the time for measuring neighbor cell.

In step 315, the terminal receives the configuration information sent by the network device.

In step 320, the terminal measures the neighbor cell based on the neighbor cell measurement standard, where the neighbor cell measurement standard is the measurement standard related to the time for measuring neighbor cell.

The terminal determines the neighbor cell measurement standard based on the configuration information, and measures the neighbor cell based on the neighbor cell measurement standard.

For the implementation details of step 310 and step 320, the description in the above embodiments can be referred to, and will not be repeated here.

To sum up, according to the method for measuring neighbor cell provided in this embodiment, the neighbor cell measurement can be triggered based on the time of the terminal and the neighbor cell measurement standard. For example, the neighbor cell is measured when the time of the terminal meets the neighbor cell measurement standard. Accordingly, the neighbor cell measurement triggered based on time is implemented.

FIG. 11 shows a flowchart of the method for measuring the neighbor cell provided by an embodiment of the present application. The method is applied to the communication system shown in FIG. 1. Exemplarily, the communication system includes a terminal in the connected state and a network device. The method includes following steps.

In step 410, the network device sends the configuration information to the terminal, where the configuration information is related to the neighbor cell measurement starting time and the neighbor cell measurement standard, and the neighbor cell measurement standard is the measurement standard related to the time for measuring neighbor cell.

In step 415, the terminal receives the configuration information sent by the network device.

In step 420, the terminal measures the neighbor cell based on the neighbor cell measurement starting time and the neighbor cell measurement standard, where the neighbor cell measurement standard is the measurement standard related to the time for measuring the neighbor cell.

The terminal determines the neighbor cell measurement starting time and the neighbor cell measurement standard based on the configuration information, and measures the neighbor cell based on the neighbor cell measurement starting time and the neighbor cell measurement standard.

To sum up, according to the method for measuring neighbor cell provided in this embodiment, the neighbor cell measurement can be triggered based on the time of the terminal, the neighbor cell measurement starting time and the neighbor cell measurement standard. For example, the neighbor cell is measured when the time of the terminal is later than or equal to the neighbor cell measurement starting time, and the time of the terminal meets the neighbor cell measurement standard. Accordingly, the neighbor cell measurement triggered based on time is implemented.

It should be noted that the sequence of the method steps provided by the embodiments of the application can be appropriately adjusted, and the steps can be increased or decreased according to the situation. Different steps can be freely combined to form a new embodiment. Those skilled in the art can easily think of various methods within the technical scope disclosed in the present application, which should be covered by the protection scope of the present application, and will not be elaborated here.

FIG. 12 shows the structural block diagram of the apparatus for measuring the neighbor cell provided by an exemplary embodiment of the present application. The apparatus can form part or all of the terminal through software, hardware or a combination of both. The apparatus includes:
a processing module 510, configured to measure the neighbor cell based on the neighbor cell measurement starting time and/or the neighbor cell measurement standard;
where the neighbor cell measurement standard is the measurement standard related to the time for measuring the neighbor cell.

In some optional embodiments, the neighbor cell measurement starting time is the first time threshold;
the processing module 510 is configured to measure the neighbor cell based on the time of the terminal and the first time threshold.

In some optional embodiments, the processing module 510 is configured to:
measure the neighbor cell when the time of the terminal is later than or equal to the first time threshold; or
measure the neighbor cell before the first time threshold.

In some optional embodiments, the first time threshold includes at least one of:
the time threshold for measuring the intra-frequency neighbor cell; and
the time threshold for measuring the inter-frequency neighbor cell.

In some optional embodiments, the processing module 510 is configured to:
perform the intra-frequency measurement on the neighbor cell based on the time of the terminal and the time threshold for measuring the intra-frequency neighbor cell; or
perform the inter-frequency measurement on the neighbor cell based on the time of the terminal and the time threshold for measuring the inter-frequency neighbor cell.

In some optional embodiments, the first time threshold is associated with the first reference location, and the first time threshold is applied when the terminal is located at the first reference location.

In some optional embodiments, the processing module 510 is configured to determine the second time threshold based on the location of the terminal and the correlation between reference locations and time thresholds.

In some optional embodiments, the processing module 510 is configured to measure the neighbor cell based on the time of the terminal and the second time threshold after determining the second time threshold based on the location of the terminal and the correlation between reference locations and time thresholds.

In some optional embodiments, the first time threshold may be determined based on the first time and the first offset value.

In some optional embodiments, the neighbor cell measurement standard includes at least one of:
the difference between the time of the terminal and the service providing time of the upcoming satellite is less than or equal to the third time threshold; and
the time of the terminal is later than the fourth time threshold.

In some optional embodiments, the processing module 510 is configured to measure the neighbor cell when the time of the terminal meets the neighbor cell measurement standard.

In some optional embodiments, the processing module 510 is configured to start or restart the timer when the time of the terminal meets the neighbor cell measurement standard; and measure the neighbor cell during the running of the timer.

In some optional embodiments, the processing module 510 is configured to measure the neighbor cell when the time of the terminal meets the neighbor cell measurement starting time and the neighbor cell measurement standard.

In some optional embodiments, the neighbor cell measurement starting time is the first time threshold; and the processing module 510 is configured to:
measure the neighbor cell when the time of the terminal is later than or equal to the first time threshold and the time of the terminal meets the neighbor cell measurement standard; or
measure the neighbor cell before the first time threshold when the time of the terminal meets the neighbor cell measurement standard.

In some optional embodiments, the processing module 510 is configured to measure the neighbor cell when the time of the terminal is later than or equal to the first time threshold, and the difference between the time of the terminal and the service providing time of the upcoming satellite is less than or equal to the third time threshold.

In some optional embodiments, the processing module 510 is configured to:
measure the neighbor cell before the first time threshold when the difference between the time of the terminal and the service providing time of the upcoming satellite is less than or equal to the third time threshold; or
measure the neighbor cell before the first time threshold when the time of the terminal is later than the fourth time threshold.

In some optional embodiments, the processing module 510 is configured to start or restart the timer when the time of the terminal meets the neighbor cell measurement standard; and, during the running of the timer, measure the neighbor cell when determining that the time of the terminal is later than or equal to the first time threshold.

In some optional embodiments, the processing module 510 is configured to start or restart the timer when the time of the terminal meets the neighbor cell measurement standard; and, during the running of the timer, measure the neighbor cell before the first time threshold.

In some optional embodiments, the time of the terminal includes:
the local time of the terminal; or
the time obtained by the terminal from the global navigation satellite system; or
the time obtained by the terminal from the network device; or
the scheduled time of the terminal to measure the neighbor cell.

In some optional embodiments, the neighbor cell measurement starting time is configured by the network device; and/or
the neighbor cell measurement standard is configured by the network device.

FIG. 13 shows the structural block diagram of the apparatus for measuring the neighbor cell provided by an exemplary embodiment of the present application. The apparatus can form part or all of the network device through software, hardware or a combination of both. The apparatus includes:
a sending module 610, configured to send the configuration information to the terminal, where the configuration information is related to the neighbor cell measurement starting time and/or the neighbor cell measurement standard; and
the neighbor cell measurement standard is the measurement standard related to the time for measuring the neighbor cell.

In some optional embodiments, the configuration information includes at least one of:
the neighbor cell measurement starting time; and
the time threshold for the neighbor cell measurement standard.

In some optional embodiments, the neighbor cell measurement starting time is the first time threshold, and the first time threshold includes at least one of:
the time threshold for measuring the intra-frequency neighbor cell; and
the time threshold for measuring the inter-frequency neighbor cell.
In some optional embodiments,
the time threshold for the neighbor cell measurement standard includes the third time threshold, and the neighbor cell measurement standard includes that the difference between the time of the terminal and the service providing time of the upcoming satellite is less than or equal to the third time threshold; and/or
the time threshold for the neighbor cell measurement standard includes the fourth time threshold, and the neighbor cell measurement standard includes that the time of the terminal is later than the fourth time threshold.

In some optional embodiments, the configuration information further includes at least one of:
the reference location associated with the time threshold; and
the service providing time of the upcoming satellite.

It should be noted that when the apparatus provided in the above embodiments implements its functions, the above-mentioned division of functional modules is only taken as an example. In practical application, the above-mentioned function can be completed by different functional modules according to actual needs, that is, the content structure of the apparatus can be divided into different functional modules to complete all or part of the above-mentioned functions.

Regarding the apparatus in the above embodiments, the specific way in which each module performs operations has been described in detail in the embodiments of the methods, and will not be described in detail here.

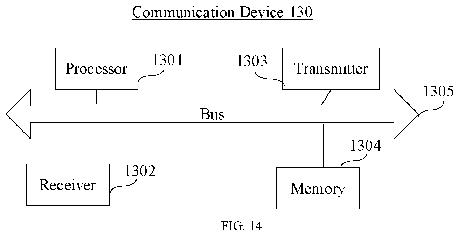

FIG. 14 shows the schematic structural diagram of the communication device provided by an exemplary embodiment of the present application. The communication device 130 includes a processor 1301, a receiver 1302, a transmitter 1303, a memory 1304 and a bus 1305.

The processor 1301 includes one or more processing cores, and the processor 1301 executes various functional applications and information processing by running software programs and modules.

The receiver 1302 and the transmitter 1303 can be implemented as a communication component, which can be a communication chip.

The memory 1304 is connected to the processor 1301 through the bus 1305.

The memory 1304 can be used to store at least one instruction, and the processor 1301 is used to execute the at least one instruction, so as to implement the steps in the above method embodiments.

In addition, the memory 1304 can be implemented by any type of volatile or nonvolatile memory device or combination thereof, including but not limited to: magnetic disk or optical disk, Electrically-Erasable Programmable Read-Only Memory (EEPROM), Erasable Programmable Read Only Memory (EPROM), Static Random Access Memory (SRAM), Read-Only Memory (ROM), magnetic memory, flash memory, Programmable Read-Only Memory (PROM) .

When the communication device is implemented as the terminal, the processor and the transceiver in the communication device according to the embodiments of the present application can be entirely implemented as the communication chip, or the transceiver can be separately formed as the communication chip. The transmitter in the transceiver performs the sending step performed by the terminal in any of the above-mentioned methods, the receiver in the transceiver performs the receiving step performed by the terminal in any of the above-mentioned methods, and the processor performs the steps other than the sending and receiving steps, which are not described in detail here.

When the communication device is implemented as the network device, the processor and the transceiver in the communication device according to the embodiments of the present application can be entirely implemented as the communication chip, or the transceiver can be separately formed as the communication chip. The transmitter in the transceiver performs the sending step performed by the network device in any of the above-mentioned methods, the receiver in the transceiver performs the receiving step performed by the network device in any of the above-mentioned methods, and the processor performs the steps other than the sending and receiving steps, which are not described in detail here.

In an exemplary embodiment, the computer-readable storage medium is also provided, in which at least one instruction, at least one program, a code set or an instruction set is stored, and the at least one instruction, the at least one program, the code set or the instruction set are loaded and executed by the processor to implement the neighbor cell measurement methods provided by the above method embodiments.

In an exemplary embodiment, the chip is further provided, which includes the programmable logic circuit and/or the program instruction. When the chip runs on the communication device, it is configured to implement the method for measuring the neighbor cell provided by the above method embodiments.

In an exemplary embodiment, the computer program product is also provided, which, when run on the processor of the computer device, causes the computer device to perform the above-mentioned neighbor cell measurement method.

Those skilled in the art should realize that in one or more of the above examples, the functions described in the embodiments of the present application can be implemented by hardware, software, firmware or any combination thereof. When implemented by software, these functions can be stored in a computer-readable medium or transmitted as one or more instructions or codes on the computer-readable medium. The computer-readable medium includes a computer storage medium and a communication medium, the communication medium includes any medium that facilitates the transfer of computer programs from one place to another. The storage medium can be any available medium that can be accessed by a general-purpose or a special-purpose computer.

The above includes only exemplary embodiments of the present application, and is not used to limit the present application. Any modification, equivalent substitution, improvement, and the like made within the spirit and principle of the present application should be included in the protection scope of the present application.

## Claims

1. A method for measuring a neighbor cell, **characterized in that**, the method is performed by a terminal, and the method comprises:
measuring the neighbor cell based on a neighbor cell measurement starting time and/or a neighbor cell measurement standard;
wherein the neighbor cell measurement standard is a measurement standard related to a time for measuring the neighbor cell.

2. The method according to claim 1, **characterized in that**, the neighbor cell measurement starting time is a first time threshold; and
measuring the neighbor cell based on the neighbor cell measurement starting time comprises:
measuring the neighbor cell based on a time of the terminal and the first time threshold.

3. The method according to claim 2, **characterized in that**, measuring the neighbor cell based on the time of the terminal and the first time threshold comprises:
measuring the neighbor cell when the time of the terminal is later than or equal to the first time threshold; or
measuring the neighbor cell before the first time threshold.

4. The method according to claim 2 or 3, **characterized in that**, the first time threshold comprises at least one of:
a time threshold for measuring an intra-frequency neighbor cell; and
a time threshold for measuring an inter-frequency neighbor cell.

5. The method according to claim 4, **characterized in that**, measuring the neighbor cell based on the time of the terminal and the first time threshold comprises:
performing an intra-frequency measurement on the neighbor cell based on the time of the terminal and the time threshold for measuring the intra-frequency neighbor cell;
or
performing an inter-frequency measurement on the neighbor cell based on the time of the terminal and the time threshold for measuring the inter-frequency neighbor cell.

6. The method according to claim 2 or 3, **characterized in that**, the first time threshold is associated with a first reference location, and the first time threshold is applied when the terminal is located at the first reference location.

7. The method according to claim 6, **characterized in that**, the method further comprises:
determining a second time threshold based on a location of the terminal and a correlation between reference locations and time thresholds.

8. The method according to claim 7, **characterized in that**, after determining the second time threshold based on the location of the terminal and the correlation between reference locations and time thresholds, the method further comprises:
measuring the neighbor cell based on the time of the terminal and the second time threshold.

9. The method according to claim 2 or 3, **characterized in that**, the first time threshold is determined based on a first time and a first offset value.

10. The method according to claim 1, **characterized in that**, the neighbor cell measurement standard comprises at least one of:
a difference between a time of the terminal and a service providing time of an upcoming satellite is less than or equal to a third time threshold; and
the time of the terminal is later than a fourth time threshold.

11. The method according to claim 10, **characterized in that**, measuring the neighbor cell based on the neighbor cell measurement standard comprises:
measuring the neighbor cell when the time of the terminal meets the neighbor cell measurement standard.

12. The method according to claim 11, **characterized in that**, measuring the neighbor cell when the time of the terminal meets the neighbor cell measurement standard comprises:
starting or restarting a timer when the time of the terminal meets the neighbor cell measurement standard; and
measuring the neighbor cell during running of the timer.

13. The method according to claim 10, **characterized in that**, measuring the neighbor cell based on the neighbor cell measurement starting time and the neighbor cell measurement standard comprises:
measuring the neighbor cell when the time of the terminal meets the neighbor cell measurement starting time and the neighbor cell measurement standard.

14. The method according to claim 13, **characterized in that**, the neighbor cell measurement starting time is a first time threshold; and
measuring the neighbor cell when the time of the terminal meets the neighbor cell measurement starting time and the neighbor cell measurement standard comprises:
measuring the neighbor cell when the time of the terminal is later than or equal to the first time threshold and the time of the terminal meets the neighbor cell measurement standard;
or
measuring the neighbor cell before the first time threshold when the time of the terminal meets the neighbor cell measurement standard.

15. The method according to claim 14, **characterized in that**, measuring the neighbor cell when the time of the terminal is later than the first time threshold and the time of the terminal meets the neighbor cell measurement standard comprises:
measuring the neighbor cell when the time of the terminal is later than or equal to the first time threshold and the difference between the time of the terminal and the service providing time of the upcoming satellite is less than or equal to the third time threshold.

16. The method according to claim 14, **characterized in that**, measuring the neighbor cell before the first time threshold when the time of the terminal meets the neighbor cell measurement standard comprises:
measuring the neighbor cell before the first time threshold when the difference between the time of the terminal and the service providing time of the upcoming satellite is less than or equal to the third time threshold;
or
measuring the neighbor cell before the first time threshold when the time of the terminal is later than the fourth time threshold.

17. The method according to claim 14, **characterized in that**, measuring the neighbor cell when the time of the terminal is later than the first time threshold and the time of the terminal meets the neighbor cell measurement standard comprises:
starting or restarting a timer when the time of the terminal meets the neighbor cell measurement standard; and
during running of the timer, measuring the neighbor cell when determining that the time of the terminal is later than or equal to the first time threshold.

18. The method according to claim 14, **characterized in that**, measuring the neighbor cell before the first time threshold when the time of the terminal meets the neighbor cell measurement standard comprises:
starting or restarting a timer when the time of the terminal meets the neighbor cell measurement standard; and
during running of the timer, measuring the neighbor cell before the first time threshold.

19. The method according to any one of claims 2 to 18, **characterized in that**, the time of the terminal comprises:
a local time of the terminal;
or
a time obtained by the terminal from a global navigation satellite system;
or
a time obtained by the terminal from a network device;
or
a scheduled time of the terminal for measuring the neighbor cell.

20. The method according to any one of claims 1 to 18, **characterized in that**,
the neighbor cell measurement starting time is configured by a network device;
and/or,
the neighbor cell measurement standard is configured by the network device.

21. A method for measuring a neighbor cell, **characterized in that**, the method is performed by a network device, and the method comprises:
sending a configuration information to a terminal, wherein the configuration information is related to a neighbor cell measurement starting time and/or a neighbor cell measurement standard;
wherein the neighbor cell measurement standard is a measurement standard related to a time for measuring the neighbor cell.

22. The method according to claim 21, **characterized in that**, the configuration information comprises at least one of:
the neighbor cell measurement starting time; and
a time threshold for the neighbor cell measurement standard.

23. The method according to claim 22, **characterized in that**, the neighbor cell measurement starting time is a first time threshold and the first time threshold comprises at least one of:
a time threshold for measuring an intra-frequency neighbor cell; and
a time threshold for measuring an inter-frequency neighbor cell.

24. The method according to claims 22, **characterized in that**,
the time threshold for the neighbor cell measurement standard comprises a third time threshold, and the neighbor cell measurement standard comprises that a difference between a time of the terminal and a service providing time of an upcoming satellite is less than or equal to the third time threshold;
and/or,
the time threshold for the neighbor cell measurement standard comprises a fourth time threshold, and the neighbor cell measurement standard comprises that the time of the terminal is later than the fourth time threshold.

25. The method according to claim 22, **characterized in that**, the configuration information further comprises at least one of:
a reference location associated with a time threshold; and
a service providing time of an upcoming satellite.

26. An apparatus for measuring a neighbor cell, **characterized in that**, the apparatus comprises:
a processing module configured to measure the neighbor cell based on a neighbor cell measurement starting time and/or a neighbor cell measurement standard;
wherein the neighbor cell measurement standard is a measurement standard related to a time for measuring the neighbor cell.

27. An apparatus for measuring a neighbor cell, **characterized in that**, the apparatus comprises:
a sending module configured to send a configuration information to a terminal, wherein the configuration information is related to a neighbor cell measurement starting time and/or a neighbor cell measurement standard;
wherein the neighbor cell measurement standard is a measurement standard related to a time for measuring the neighbor cell.

28. A terminal, **characterized in that**, the terminal comprises:
a processor;
a transceiver connected with the processor; and
a memory for storing an executable instruction of the processor;
wherein the processor is configured to load and execute the executable instruction to implement the method for measuring the neighbor cell according to any one of claims 1 to 20.

29. An access network device, **characterized in that**, the access network device comprises:
a processor;
a transceiver connected with the processor; and
a memory for storing an executable instruction of the processor;
wherein the processor is configured to load and execute the executable instruction to implement the method for measuring the neighbor cell according to any one of claims 21 to 25.

30. A computer-readable storage medium, **characterized in that**, the computer-readable storage medium stores an executable instruction, the executable instruction is loaded and executed by a processor to implement the method for measuring the neighbor cell according to any one of claims 1 to 25.
